# EUROPEAN PATENT APPLICATION

(11) **EP 4 636 283 A1**
(43) Date of publication of application: **22.10.2025**
(21) Application number: 23903540.5
(22) Date of filing: 13.12.2023
(51) Int. Cl.: F16H 57/04, B01D 35/02

(54) **FILTER DEVICE**

(30) Priority: 14.12.2022 JP 2022199589; 14.12.2022 JP 2022199590
(71) Applicant: YAMASHIN-FILTER CORP., Yokohama-shi, Kanagawa 231-0062 (JP)
(72) Inventor: NODOMI, Youichi, Yokosuka-shi, Kanagawa 239-0847 (JP)
(74) Representative: Hasegawa, Kan
(86) International application number: PCT/JP2023/044660
(87) International publication number: WO 2024/128256

(57) **Abstract**

A partition plate can be accurately attached. A filter device configured to be disposed in an axle assembly and configured to filter oil sealed inside the axle assembly, the filter device including: an attachment portion configured to be detachably disposed in the axle assembly; a casing including a hollow tubular portion and a bottom plate covering one end of the tubular portion, the tubular portion having an end not covered by the bottom plate, the end being covered by the attachment portion; and a plate portion disposed inside the casing. The casing is configured to be inserted into the axle assembly by attaching the attachment portion to the axle assembly. The tubular portion is provided with an inflow port through which the oil flows in and an outflow port through which the oil flows out. The plate portion is a lateral partition plate that divides an interior portion of the casing into a first region including the inflow port and a second region including the outflow port. An opening portion allowing the first region and the second region to communicate with each other is formed in the lateral partition plate. Both ends of the lateral partition plate are in contact with the bottom plate and the attachment portion, respectively. A protruding portion is formed on one of the lateral partition plate and the bottom plate or one of the lateral partition plate and the attachment portion, and a recessed portion into which the protruding portion is inserted is formed in the other.

## Description

### Technical Field

The present invention relates to a filter device.

### Background Art

An oil filter assembly for a differential housing is disclosed in Patent Document 1. The oil filter assembly includes a housing that is a filter housing adapted to be removably attached to a drive axle housing and defining an interior volume for containing oil to be filtered, a mounting arrangement for fixing the filter assembly to the drive axle housing so that the filter assembly is releasable thereto, and a filter element adapted to filter particulate contaminants from the oil in the drive axle. The filter housing includes an inlet at an upper portion thereof and an outlet at a lower portion thereof and defines a flow path therethrough, and the filter element is disposed downstream of the drive axle.

### Citation List

### Patent Document

Patent Document 1: EP3378548 (B1)

### Summary of Invention

### Technical Problem

In the invention described in Patent Document 1, a plate-like baffle element (partition plate) defining a flow path is disposed in the filter housing. However, in the invention described in Patent Document 1, a method of attaching the baffle element is not disclosed, and the baffle element may not be accurately attached depending on the method of attaching the baffle element.

The present invention is made in view of the problem above, and an object of the present invention is to provide a filter device that enables a partition plate to be accurately attached.

### Solution to Problem

In order to solve the problem above, a filter device according to the present invention is, for example, a filter device configured to be disposed in an axle assembly and configured to filter oil sealed inside the axle assembly, the filter device including: an attachment portion configured to be detachably disposed in the axle assembly; a casing including a tubular portion having a hollow interior portion and a bottom plate covering one end of the tubular portion, the tubular portion having an end not covered by the bottom plate, the end being covered by the attachment portion; and
a plate portion disposed inside the casing. The casing is configured to be inserted into the axle assembly by attaching the attachment portion to the axle assembly. The tubular portion is provided with an inflow port through which the oil can flow in and an outflow port through which the oil can flow out. The plate portion is a lateral partition plate that divides an interior portion of the casing into a first region including the inflow port and a second region including the outflow port. An opening portion allowing the first region and the second region to communicate with each other is formed in the lateral partition plate. Both ends of the lateral partition plate are in contact with the bottom plate and the attachment portion, respectively. A protruding portion is formed on one of the lateral partition plate and the bottom plate or one of the lateral partition plate and the attachment portion, and a recessed portion into which the protruding portion is inserted is formed in the other.

According to the filter device of the present invention, the protruding portion formed on one of the lateral partition plate and the bottom plate or one of the lateral partition plate and the attachment portion is inserted into the recessed portion formed in the other. Accordingly, the lateral partition plate can be accurately attached. When the lateral partition plate is fixed to the bottom plate or the attachment portion by welding or the like, positioning at the time of processing is difficult, and accurate attaching (positioning) is unlikely to be performed. However, by adopting a configuration in which the protruding portion is inserted into the recessed portion, accurate positioning is achieved. In addition, since it is only necessary to insert the protruding portion into the recessed portion, assembling is easy.

The recessed portion may have a strip-shape, an arcuate shape, a semi-elliptical shape, or a semicircular shape. Accordingly, an inclination of the lateral partition plate can be reduced. In particular, a first hole and a second hole that are a pair of holes may be formed in the attachment portion in a manner that the tubular portion is sandwiched between the first hole and the second hole when viewed along a center line of the tubular portion, and when viewed along the center line, an inclination of the lateral partition plate with respect to a first line that is a line passing through a center of the first hole and a center of the second hole may be 0.5° or less.

A first hole and a second hole that are a pair of holes may be formed in the attachment portion in a manner that the tubular portion is sandwiched between the first hole and the second hole when viewed along a center line of the tubular portion, and the lateral partition plate may be inclined with respect to a first plane that is a plane including an axis of the tubular portion substantially parallel to a first line and passing through a center of the first hole and a center of the second hole. Accordingly, the oil flowing into the inside from the inflow port flows along the lateral partition plate, and even when the oil flows backward, dust can be prevented from flowing out from the inflow port.

An inclination angle of the lateral partition plate with respect to the first plane may be 15° or more. Accordingly, the back-flow of the oil can be effectively prevented.

The plate portion may further include a longitudinal partition plate that partitions each of the first region and the second region into a plurality of regions, and the longitudinal partition plate may partition the first region into a third region and a fourth region, and may partition the second region into a fifth region and a sixth region. Accordingly, the strength of the casing is increased, and the tubular portion is less likely to be deformed even when strong force is applied due to the rotation of the axle.

In addition, a first partition plate may be provided in the fourth region, and the first partition plate may be disposed so as to be in contact with the lateral partition plate, the longitudinal partition plate, and the tubular portion. The first partition plate may partition the fourth region into a seventh region and an eighth region. The lateral partition plate may be provided with a plurality of the opening portions. The plurality of opening portions may include a first opening portion that allows the seventh region and the six region to communicate with each other and a second opening portion that allows the eighth region and the sixth region to communicate with each other. The longitudinal partition plate may be provided with a third opening portion that allows the third region and the seventh region to communicate with each other and a fourth opening portion that allows the fifth region and the sixth region to communicate with each other. The inflow port may allow the oil to flow into the third region and the eighth region, and the outflow port may be disposed in the fifth region adjacent to the third region. Accordingly, the flow of the oil becomes complicated, and the outflow of dust from the inflow port due to the back-flow of the oil can be prevented.

In addition, a second partition plate may be provided in the sixth region adjacent to the fourth region, the second partition plate may be disposed so as to in contact with the lateral partition plate, the longitudinal partition plate, and the tubular portion. The second partition plate may partition the sixth region into a ninth region and a tenth region. The first opening portion may allow the seventh region and the ninth region to communicate with each other, the second opening portion may allow the eighth region and the tenth region to communicate with each other, and the fourth opening portion may allow the fifth region and the tenth region to communicate with each other. The longitudinal partition plate may be provided with a fifth opening portion that allows the fifth region and the ninth region to communicate with each other. Accordingly, the outflow of dust from the inflow port due to the back-flow of the oil can be prevented.

### Advantageous Effects of Invention

According to the present invention, the partition plate can be accurately attached.

### Brief Description of Drawings

FIG. 1 is a diagram illustrating an overview of an axle assembly 100 provided with a filter device 1.
FIG. 2 is a perspective view illustrating an overview of the filter device 1.
FIG. 3 is a cross-sectional view illustrating the overview of the filter device 1.
FIG. 4 is a diagram illustrating a state where a lateral partition plate 31 is attached to a bottom plate 15.
FIG. 5 is a diagram illustrating a state where the lateral partition plate 31 is attached to an attachment portion 20.
FIG. 6 is a perspective view illustrating an overview of a filter device 1A.
FIG. 7 is a front view illustrating an overview of a filter device 2.
FIG. 8 is a perspective view illustrating the overview of the filter device 2.
FIG. 9 is a perspective view illustrating an overview of a filter device 3.
FIG. 10 is a perspective view illustrating the overview of the filter device 3.
FIG. 11 is a perspective view illustrating an overview of a filter device 4.
FIG. 12 is a perspective view illustrating the overview of the filter device 4.
FIG. 13 is a perspective view illustrating an overview of a filter device 4A.
FIG. 14 is a perspective view illustrating an overview of a filter device 4B.
FIG. 15 is a perspective view illustrating the overview of the filter device 4B.

### Description of Embodiments

Embodiments of the present invention will be described below in detail with reference to the drawings. A filter device according to the present invention is configured to be disposed in an axle assembly of a construction machine or the like, and configured to filter oil sealed into the axle assembly and thus removes dust or the like contained in the oil.

### First Embodiment

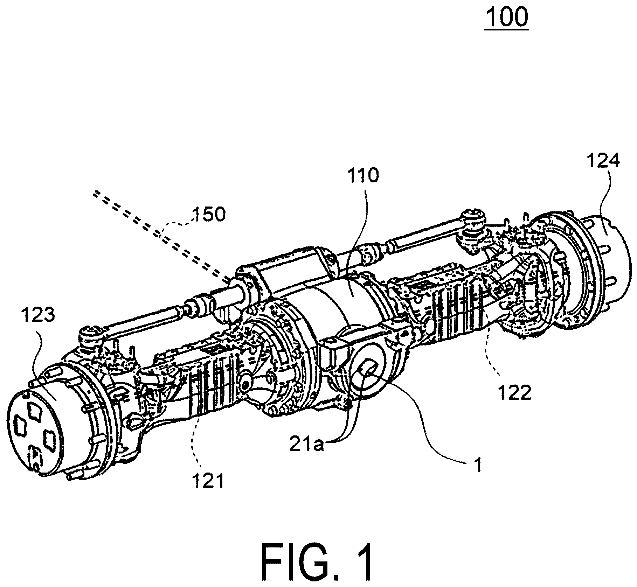

FIG. 1 is a diagram illustrating an overview of an axle assembly 100 provided with a filter device 1 according to a first embodiment of the present invention. The axle assembly 100 is a drive axle of a construction machine.

The axle assembly 100 mainly includes a differential housing 110. The differential housing 110 is disposed near the center of the axle assembly 100.

A differential gear (not illustrated) is disposed in the differential housing 110. The differential gear is coupled to a drive shaft 150 via gears or the like and transmits driving of the drive shaft 150 to two axles 121 and 122. The axles 121 and 122 are coupled to axle ends 123 and 124, respectively. The axle ends 123, 124 are provided with wheels (not illustrated). The drive shaft 150 rotates, and thus the axles 121 and 122, that is, the wheels rotate. In addition, a brake device (not illustrated) is disposed inside the differential housing 110.

The filter device 1 is disposed on the opposite side of the drive shaft 150 with the differential housing 110 interposed therebetween. The filter device 1 is disposed near the center in a left-right direction of the axle assembly 100. Note that the position of the filter device 1 is not limited to this position.

The differential housing 110 is provided with one filter device 1 in FIG. 1 but may be provided with a plurality of filter devices 1.

A crown wheel (not illustrated) is disposed in the differential housing 110 so as to be partially immersed in the oil. The filter device 1 is arranged close to the crown wheel. When the construction machine moves forward, the crown wheel rotates, and the oil in the differential housing 110 is stirred.

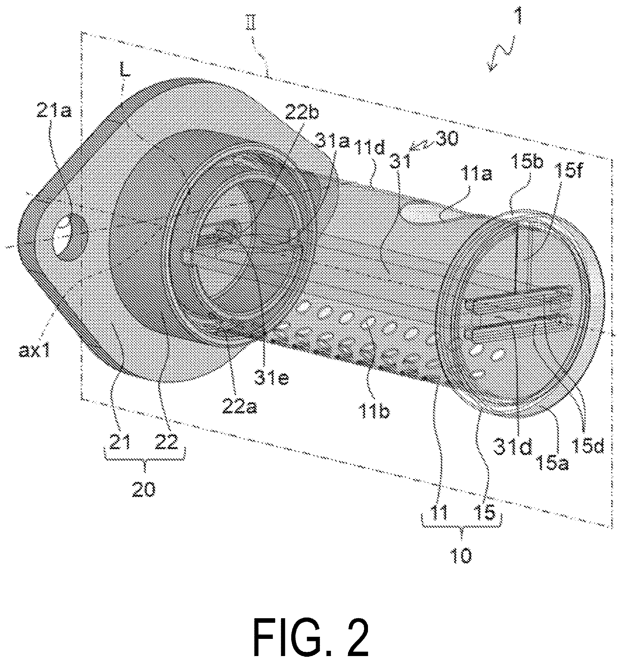

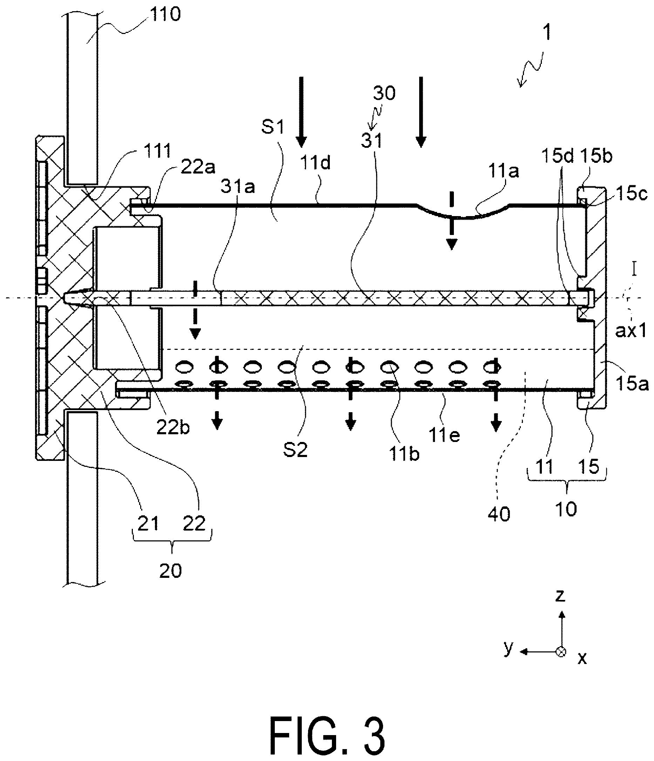

Next, the filter device 1 will be described. FIG. 2 is a perspective view illustrating an overview of the filter device 1. In FIG. 2, the inside of the filter device 1 is transparently illustrated. FIG. 3 is a cross-sectional view illustrating the overview of the filter device 1. The arrows in FIG. 3 indicate the flow of the oil.

Hereinafter, a direction along an axis ax1 is referred to as a y direction, and two directions orthogonal to the axis ax1 (y direction) are referred to as an x direction and a z direction. A line L (corresponding to a first line of the present invention) connecting holes 21a disposed in an attachment portion 20, that is, a longitudinal direction of the axle assembly 100 (see FIG. 1) is defined as the x direction. In addition, the z direction is defined as an up-down direction, a +z direction is defined as an upward direction, and a -z direction is defined as a downward direction.

The filter device 1 mainly includes a casing 10, the attachment portion 20, a plate portion 30, and a filtration member 40.

The attachment portion 20 is a member that is detachably disposed in the axle assembly 100. The attachment portion 20 mainly includes an attachment plate 21 having a plate shape and a tubular portion 22 having a tubular shape.

The attachment plate 21 is disposed on the outside of the differential housing 110. A pair of holes 21a (corresponding to a first hole and a second hole of the present invention) are formed in the attachment plate 21 such that a tubular portion 11 is sandwiched therebetween when viewed along the axis ax1 of the tubular portion 11.

In the present embodiment, a cross-sectional shape of the tubular portion 22 in a plane orthogonal to the axis ax1 (hereinafter, simply referred to as a cross-sectional shape) is a circular shape, but is not particularly limited, and may be, for example, an elliptical shape, a rectangular shape, a polygonal shape, or the like.

The casing 10 is disposed in the attachment portion 20. The casing 10 mainly includes the tubular portion 11 having a hollow tubular shape, and a bottom plate 15. The tubular portion 11 is formed into a cylindrical shape obtained, for example, by rolling a thin sheet having a thickness of about 5 mm to 10 mm. The axis ax1 is a central axis of the tubular portion 11. Note that in the present embodiment, the cross-sectional shape of the tubular portion 11 is a circular shape, but is not particularly limited, and may be, for example, an elliptical shape, a rectangular shape, a polygonal shape, or the like.

The tubular portion 11 is provided with an inflow port 11a through which the oil filled in the differential housing 110 flows in and outflow ports 11b through which the oil flows out. The inflow port 11a is disposed at a position including an upper end 11d (+z end) of the tubular portion 11, and the outflow ports 11b are disposed in a position including a lower end 11e (-z end) of the tubular portion 11. Here, the upper end 11d means an upward generating line of the tubular portion 11, and the lower end 11e means a downward generating line of the tubular portion 11.

The inflow port 11a is a hole having a diameter of about 5 mm to 10 mm, and the tubular portion 11 is provided with the single inflow port 11a. The outflow port 11b is a hole having a diameter of about 1 mm, and the tubular portion 11 is provided with a plurality of outflow ports (many outflow ports) 11b. The outflow ports 11b are, for example, punched holes. Note that the inflow port 11a and the outflow ports are not limited to circular shapes, and may have, for example, an elliptical shape, a rectangular shape, a polygonal shape, or the like.

As illustrated in FIG. 3, the attachment plate 21 is attached to the differential housing 110 from the outside, and thus the filter device 1 is disposed in the differential housing 110 so as to cover an opening 111 of the differential housing 110. The filter device 1 is fixed to the differential housing 110 by fastening members (not illustrated) disposed in the holes 21a formed in the attachment plate 21.

In a region of the casing 10 where the outflow ports 11b are disposed, the filtration member 40 is disposed along the inside of the tubular portion 11. The filtration member 40 is, for example, a metallic mesh.

Note that the positions of the inflow port 11a and the outflow ports 11b are not limited to these positions. The inflow port 11a may be disposed at a position slightly shifted from the upper end 11d of the tubular portion 11 (in the vicinity of the upper end), for example, at a position slightly shifted from the upper end 11d toward a +x side or a -x side. The outflow ports 11b may be disposed in a region that is at a lower side of the tubular portion 11 and does not include the lower end 11e.

The bottom plate 15 has a plate portion (bottom plate 15a) and is disposed so as to cover one end of the tubular portion 11. The bottom plate 15 includes the bottom plate 15a and a tubular portion 15b disposed at a peripheral edge of the bottom plate 15a. The tubular portion 11 is disposed along an inner peripheral surface 15c of the tubular portion 15b. The bottom plate 15a includes two ribs 15d and a rib 15f. The ribs 15d are substantially parallel to the line L, and the rib 15f is substantially orthogonal to the line L. The rib 15f reinforces the bottom plate 15a and the rib 15d.

The attachment portion 20 is disposed at an end of the tubular portion 11, which is on the side not covered by the bottom plate 15. An annular groove 22a is formed in the attachment portion 20 (the tubular portion 22). The tubular portion 11 is inserted into the groove 22a, and thus the tubular portion 11 is disposed in the attachment portion 20.

The attachment plate 21 is disposed in the differential housing 110, and thus the tubular portion 22 and the casing 10 are inserted through the opening 111 into the differential housing 110. The inside of differential housing 110 is filled with the oil. Therefore, the casing 10 is immersed in the filled oil.

When the oil in the differential housing 110 is stirred, the oil is poured into an upper portion of the filter device 1 from above (the +z direction). As a result, the oil is supplied from the inflow port 11a to the filter device 1.

The plate portion 30 is disposed inside the casing 10. In the present embodiment, the plate portion 30 is a lateral partition plate 31. The lateral partition plate 31 extends along a plane I (corresponding to a first plane of the present invention) that includes the axis ax1 of the tubular portion 11 and is substantially parallel to the line L. The lateral partition plate 31 divides an interior portion of the casing 10 into a first region S1 including the inflow port 11a and a second region S2 including the outflow ports 11b. In other words, in the casing 10, a region on the +z side of the lateral partition plate 31 is the first region S 1, and a region on the -z side of the lateral partition plate 31 is the second region S2. Note that a state of being disposed along the plane I means a state of being disposed on the plane I or being slightly (for example, a few millimeters to a few centimeters) separated from the plane I.

An opening portion 31a is formed in the lateral partition plate 31. The opening portion 31a allows the first region S1 and the second region S2 to communicate with each other. The opening portion 31a allows the oil to flow from the first region S1 to the second region S2.

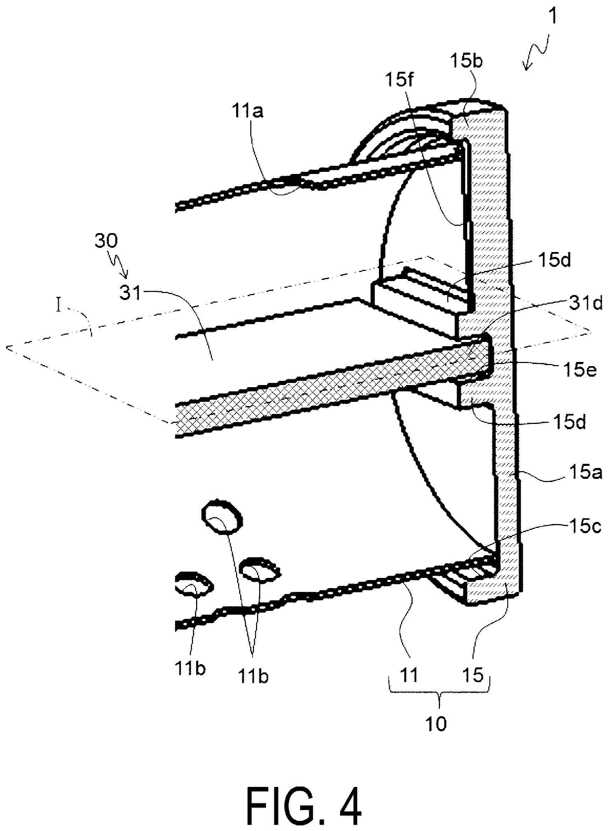

The lateral partition plate 31 is in contact with the bottom plate 15 and the attachment portion 20. FIG. 4 is a diagram illustrating a state where the lateral partition plate 31 is attached to the bottom plate 15. In FIG. 4, the filter device 1 is cut along a plane II that includes the axis ax1 and is substantially orthogonal to the plane I. An end 31d (corresponding to a protruding portion of the present invention) of the lateral partition plate 31 is inserted into a recessed portion 15e between the two ribs 15d. The end 31d, the rib 15d, and the recessed portion 15e are strip-shaped. Therefore, the lateral partition plate 31 is unlikely to rotate with respect to the bottom plate 15.

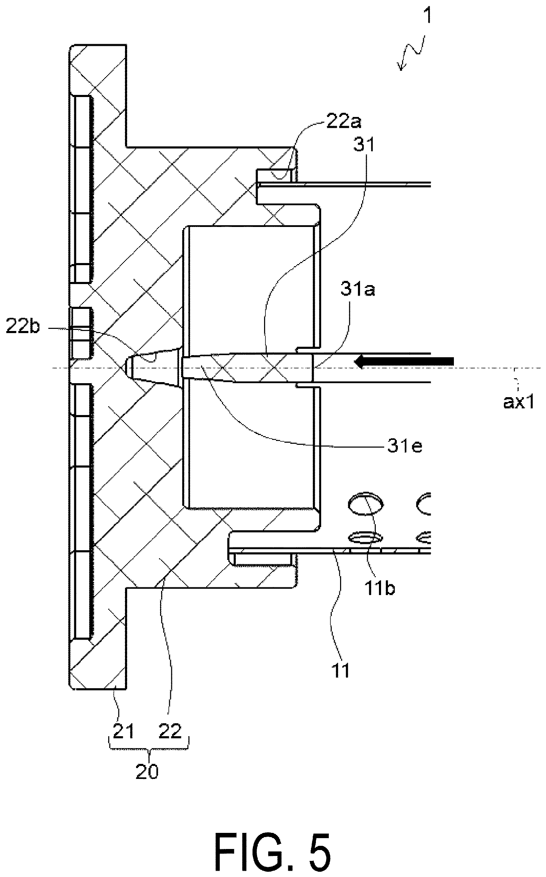

FIG. 5 is a diagram illustrating a state where the lateral partition plate 31 is attached to the attachment portion 20. In FIG. 5, the filter device 1 is cut along the plane II. A recessed portion 22b is formed in the attachment portion 20 (the tubular portion 22). An end 31e (corresponding to a protruding portion of the present invention) of the lateral partition plate 31 is inserted into the recessed portion 22b, and thus the lateral partition plate 31 is disposed in the attachment portion 20. The recessed portion 22b and the end 31e are strip-shaped and substantially parallel to the line L. Therefore, the lateral partition plate 31 is unlikely to rotate with respect to the attachment portion 20.

Note that in the present embodiment, the recessed portion 22b and the end 31e are tapered but are not essential to be tapered.

The strip-shaped ends 31d and 31e are inserted into the strip-shaped recessed portions 15e and 22b substantially parallel to the line L, and thus the lateral partition plate 31 is disposed substantially parallel to the line L. Specifically, the inclination of the lateral partition plate 31 with respect to the line L is 0.5° or less.

Next, the function of the filter device 1 will be described. As indicated by the arrows (solid line and dotted line) in FIG. 3, the construction machine moves forward and thus the oil in the differential housing 110 flows in the -z direction (from the upper side to the lower side on the paper in FIG. 3). Therefore, the oil supplied from the inflow port 11a to the filter device 1 flows in the -z direction and falls against the lateral partition plate 31.

The oil flowing into the second region S2 passes through the filtration member (not illustrated) to be filtered, and then passes through the outflow ports 11b to flow out of the filter device 1. Dust contained in the oil is blocked by the filtration member 40 and accumulated in the second region S2.

Depending on the rotating speed of the axle and the amount of change in the rotating speed, the flow of the oil increases, and thus strong force is likely to be applied to the lateral partition plate 31. Both the ends 31d and 31e of the lateral partition plate 31 are respectively inserted into the recessed portions 15e and 22b; therefore, even if the strong force is applied, deformation and positional displacement of the lateral partition plate 31 are unlikely to occur.

According to the present embodiment, by inserting the strip-shaped ends 31d and 31e into the strip-shaped recessed portions 15e and 22b, the lateral partition plate 31 can be accurately attached, here, substantially parallel to the line L (the inclination of the lateral partition plate 31 with respect to the line L is 0.5° or less).

If both the ends 31d and 31e are respectively fixed to the bottom plate 15a and the attachment portion 20 by welding or the like, positioning at the time of welding is difficult, and the lateral partition plate 31 is unlikely to be fixed at an accurate position. On the other hand, by adopting a configuration in which the ends 31d and 31e are inserted into the recessed portions 15e and 22b, the lateral partition plate 31 can be attached at an accurate position. Since the recessed portions 15e and 22b and the ends 31d and 31e are strip-shaped, the inclination of the lateral partition plate can be made small, that is, the lateral partition plate can be disposed substantially parallel to the line L.

In addition, according to the present embodiment, the lateral partition plate 31 can be easily assembled only by inserting the strip-shaped ends 31d and 31e into the recessed portions 15e and 22b.

According to the present embodiment, since the internal configuration of the casing 10 is simple, the oil easily flows through the interior portion of the casing 10. Therefore, the amount of oil to be filtered by the filter device 1 can be increased.

According to the present embodiment, since the bottom plate 15a is reinforced by the ribs 15d and 15f, deformation or the like of the casing 10 when strong force is applied due to the rotation of the axle can be prevented.

In the present embodiment, the ends 31d and 31e (protruding portions) of the lateral partition plate 31 are inserted into the recessed portions 15e and 22b of the bottom plate 15 or the attachment portion 20 (the tubular portion 22), but the protruding portions and the recessed portions may be reversed. For example, a protruding portion of the bottom plate 15 or the attachment portion 20 may be inserted into a recessed portion of the lateral partition plate 31. In other words, it is desirable that one of the lateral partition plate 31 and the bottom plate 15 or one of the lateral partition plate 31 and the attachment portion 20 has a protruding portion formed on one side and a recessed portion formed on the other side.

In the present embodiment, the inflow port 11a is disposed close to the bottom plate 15, and the opening portion 31a is disposed close to the attachment plate 21; however, the arrangement of the inflow port 11a and the opening portion 31a is not limited to these positions. For example, the opening portion 31a may be disposed close to the bottom plate 15, and the inflow port 11a may be disposed close to the attachment plate 21.

In the present embodiment, the end of the tubular portion 11 is in contact with the attachment plate 21, and the tubular portion 22 covers the periphery of the tubular portion 11 to provide the attachment portion 20 at the end of the tubular portion 11; however, the form of providing the attachment portion 20 at the end of the tubular portion 11 is not limited thereto. For example, the tubular portion 22 is not essential, and the tubular portion 11 may be inserted into an annular groove disposed in the attachment plate 21, and the lateral partition plate 31 may be inserted into a groove disposed in the attachment plate 21 and substantially parallel to the line L.

In the present embodiment, the attachment plate 21 and the bottom plate 15 are disposed along a plane parallel to an xz plane, but may be inclined with respect to the xz plane.

### Modification of First Embodiment

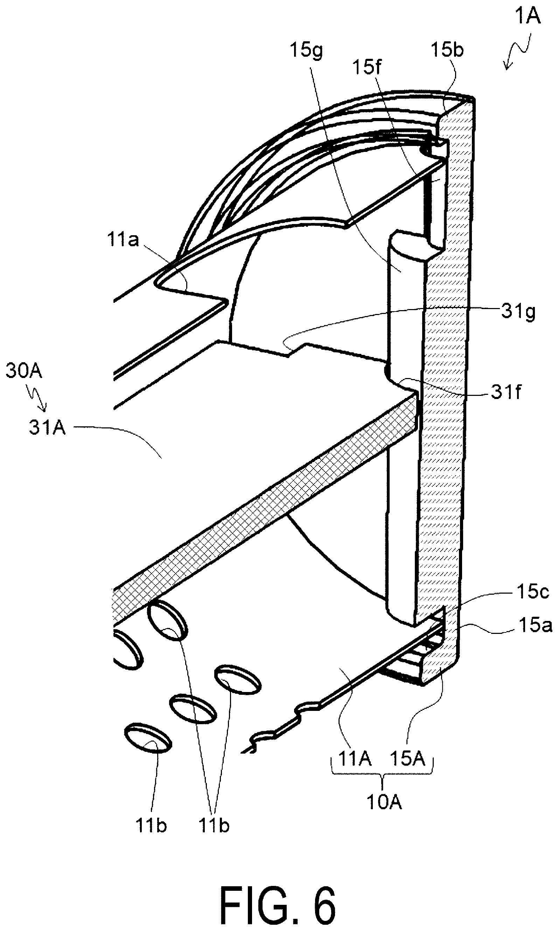

In the filter device 1, the strip-shaped ends 31d and 31e are inserted into the strip-shaped recessed portions 15e and 22b, but the shape of the recessed portions are not limited to the strip-shape. FIG. 6 is a diagram illustrating an overview of a filter device 1A according to a modification and is a partially enlarged perspective view of the filter device 1A. In FIG. 6, the filter device 1A is cut along the plane II.

The filter device 1A mainly includes a casing 10A, the attachment portion 20 (not illustrated in FIG. 6), a plate portion 30A, and the filtration member 40 (not illustrated in FIG. 6).

The casing 10A mainly includes the tubular portion 11 having a hollow tubular shape, and a bottom plate 15A. The bottom plate 15A is disposed so as to cover one end of the tubular portion 11. The bottom plate 15A includes a bottom plate 15a and a tubular portion 15b, and ribs 15f and 15g are formed on the bottom plate 15a. The rib 15g (corresponding to the protruding portion of the present invention) is a strip-shaped rib, and has a semicircular cross-sectional shape when cut along a plane parallel to the plane I. In other words, the rib 15g has a semicircular column shape.

The plate portion 30A is disposed inside the casing 10 in the same manner as the plate portion 30, and is a lateral partition plate 31A in the present embodiment. The lateral partition plate 31A is disposed along the plane I in the same manner as the lateral partition plate 31, and divides an interior portion of the casing 10A into the first region S1 and the second region S2. The opening portion 31a (not illustrated in FIG. 6) is formed in the lateral partition plate 31A.

The lateral partition plate 31A is in contact with the bottom plate 15A and the attachment portion 20. Since the attachment structure between the lateral partition plate 31A and the attachment portion 20 is the same as the attachment structure between the lateral partition plate 31 and the attachment portion 20, description thereof will be omitted, and the attachment structure between the lateral partition plate 31A and the bottom plate 15A will be described.

A recessed portion 31f is formed at an end on the bottom plate 15A side of the lateral partition plate 31A. The recessed portion 31f has a semicircular shape. The rib 15g is inserted into the recessed portion 31f. Since the recessed portion 31f and the rib 15g are adjacent to each other, the lateral partition plate 31A is positioned in the rotation direction. Note that a recessed portion 31g disposed adjacent to the recessed portion 31f is not essential.

In the present embodiment, the rib 15g having a semicircular column shape is inserted into the recessed portion 31f having a semicircular shape, and thus the lateral partition plate 31A can be configured to be unlikely to rotate with respect to the bottom plate 15. The lateral partition plate 31A can be accurately disposed, that is, substantially parallel to the line L (the inclination of the lateral partition plate 3 1A with respect to the line L is 0.5° or less).

Note that the cross-sectional shape of the rib 15g cut along the plane parallel to the plane I is not limited to a semicircular shape. For example, the cross-sectional shape may be an arcuate shape or a semi-elliptical shape. Similarly, the shape of the recessed portion 31f is not limited to a semicircular shape, and may be, for example, an arcuate shape or a semi-elliptical shape. However, the protruding portion (rib 15g) and the recessed portion 31f corresponding to the protruding portion need to have substantially the same shape.

### Second Embodiment

A second embodiment of the present invention is a configuration in which the lateral partition plate is inclined. Hereinafter, a filter device 2 according to the second embodiment will be described below. Note that the same components as those in the first embodiment are denoted by the same reference numerals, and descriptions thereof will be omitted.

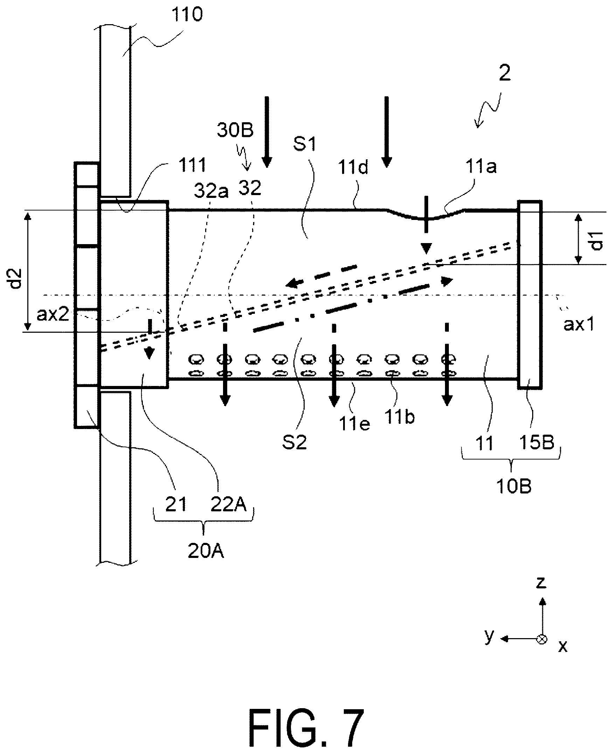

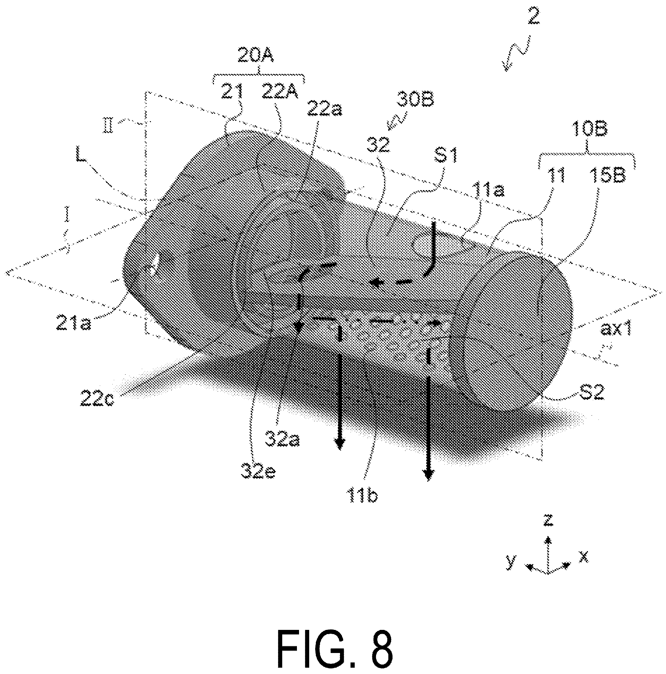

FIG. 7 is a front view illustrating an overview of the filter device 2. FIG. 8 is a perspective view illustrating the overview of the filter device 2. In FIGS. 7 and 8, the inside of the filter device 2 is transparently illustrated. The arrows in FIG. 7 indicate the flow of the oil.

The filter device 2 mainly includes a casing 10B, an attachment portion 20A, a plate portion 30B, and the filtration member 40 (see FIG. 3). The plate portion 30B is disposed inside casing 10 in the same manner as the plate portion 30, and is a lateral partition plate 32 in the present embodiment.

The lateral partition plate 32 is inclined with respect to a plane parallel to the x-y plane, in other words, with respect to the plane I. The lateral partition plate 32 is disposed so as to intersect with the axis ax1. In the present embodiment, the volumes of the first region S1 and the second region S2 are substantially equal to each other, but are not particularly limited.

Note that the inclination angle of the lateral partition plate 32 about an x-axis with respect to the plane parallel to the x-y plane is preferably 15° or more.

When the tubular portion 11, the inflow port 11a, the lateral partition plate 32, and the opening portion 32a are projected onto the plane II, the shortest distance d2 between the geometric center of the opening portion 31a (in the present embodiment, the intersection of an axis ax2 with the lateral partition plate 31 in FIG. 7) and a line representing the upper end 11d of the tubular portion 11 is longer than a distance d1 between the geometric center of the inflow port 11a and a line representing the lateral partition plate 31. Although the plane II in the present embodiment includes the axis ax1, the plane II may be disposed at a position not including the axis ax1.

In other words, the lateral partition plate 32 is inclined with respect to the plane I so that the position in the +z direction is higher toward a -y direction, the inflow port 11a is disposed in the vicinity of an end on a -y side at which the distance to the lateral partition plate 32 is shorter, and the opening portion 31a is disposed in the vicinity of an end on a +y side of the lateral partition plate 32.

The casing 10B mainly includes the tubular portion 11 and a bottom plate 15B. The attachment structure of the lateral partition plate 32 and the bottom plate 15B is substantially the same as the attachment structure of the lateral partition plate 31A and the bottom plate 15. The bottom plate 15B is different from the bottom plate 15 in the positions of a recessed portion into which the end of the lateral partition plate 32 is inserted and a rib constituting the recessed portion. Note that the shape of the rib of the bottom plate 15B may be different from the shape of the rib of the bottom plate 15.

The attachment portion 20A mainly includes the attachment plate 21 having a plate shape and a tubular portion 22A having a tubular shape. The groove 22a and a pair of grooves 22c are formed in the tubular portion 22A. A line connecting the pair of grooves 22c is substantially parallel to the line L. An end 32e of the lateral partition plate 32 is inserted into the grooves 22c.

When the construction machine moves forward, the oil in the differential housing 110 flows in the -z direction (from the upper side to the lower side on the paper in FIG. 7). Therefore, the oil supplied from the inflow port 11a to the filter device 1 flows in the -z direction and falls against the lateral partition plate 31. Since the lateral partition plate 32 is inclined with respect to the plane I, the oil falling against the lateral partition plate 32 flows along the lateral partition plate 32 in the -z direction, that is, toward the opening portion 31a, and flows through the opening portion 31a into the second region S2.

When the construction machine moves rearward, the oil in the differential housing 110 flows in the +z direction (from the lower side to the upper side on the paper in FIGS. 7 and 8). Therefore, dust accumulated in the second region S2 also flows in the +z direction. However, as indicated by the dash-double-dot line arrows in FIGS. 7 and 8, the oil containing the dust falls against the lateral partition plate 31 and flows in the +z direction, that is, away from the opening portion 31a. Therefore, the dust is less likely to flow from the opening portion 31a into the first region S1, and is less likely to flow from the first region S1 toward the inflow port 11a.

According to the present embodiment, the lateral partition plate 32 is inclined with respect to the x-y plane, and the opening portion 32a is disposed in the vicinity of the end on the -z side of the lateral partition plate 32. Thus, the flow of the oil in the -z direction along the lateral partition plate 32 is formed inside the filter device 1, and the oil easily flows from the inflow port 11a into the filter device 1.

In addition, according to the present embodiment, the lateral partition plate 32 is inclined with respect to the x-y plane, and the opening portion 32a is disposed in the vicinity of the end on the -z side of the lateral partition plate 32. Thus, even when the vehicle moves rearward and the oil flows backward, the outflow of dust from the inflow port 11a can be prevented. In particular, by setting the inclination angle of the lateral partition plate 32 with respect to the plane parallel to the x-y plane to 15° or more, the outflow of dust from the inflow port 11a can be effectively prevented.

In the present embodiment, the inflow port 11a is disposed closed to the bottom plate 15B, and the opening portion 32a is disposed to close to the attachment plate 21; however, the arrangement of the inflow port 11a and the opening portion 32a is not limited to these positions. For example, the opening portion 32a may be disposed close to the bottom plate 15B, and the inflow port 11a may be disposed close to the attachment plate 21. However, in this case, when the tubular portion 11, the inflow port 11a, the lateral partition plate 32, and the opening portion 32a are projected onto the plane II (see FIG. 3 or the like), it is desirable that the inclination of the lateral partition plate 32 is reversed from the configuration illustrated in FIGS. 7 and 8 such that a distance between the geometric center of the opening portion 31a and the line representing the upper end 11d of the tubular portion 11 is longer than a distance between the geometric center of the inflow port 11a and a line representing the lateral partition plate 32.

### Third Embodiment

A third embodiment of the present invention is a configuration in which a plate portion includes a lateral partition plate and a longitudinal partition plate. Hereinafter, a filter device 3 according to the third embodiment will be described. Note that the same parts as those of the first and second embodiments are denoted with the same reference numerals, and the description thereof is omitted.

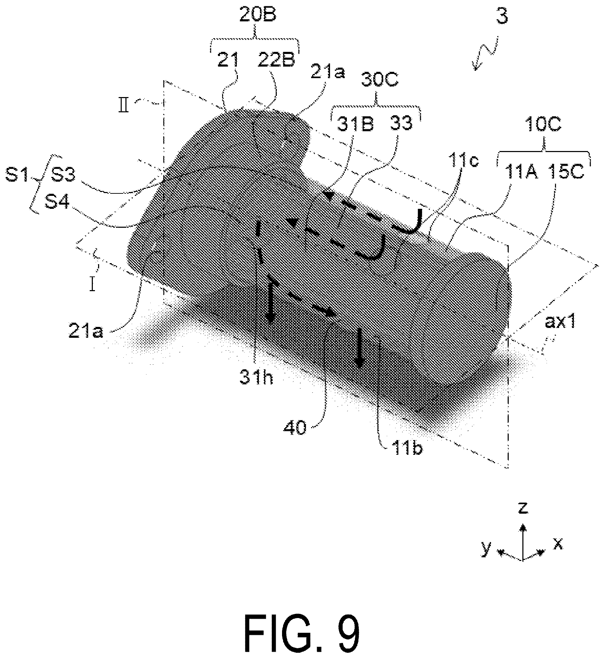

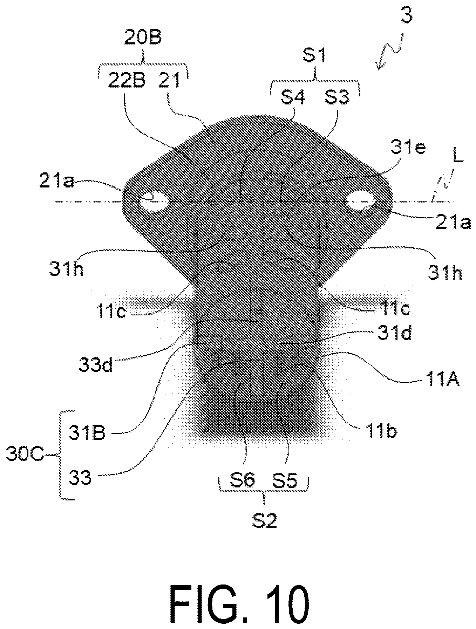

FIGS. 9 and 10 are perspective views each illustrating an overview of the filter device 3. In FIGS. 9 and 10, the inside of the filter device 3 is transparently illustrated. The filter device 3 mainly includes a casing 10C, an attachment portion 20B, a plate portion 30C, and the filtration member 40. Note that In FIG. 10, the bottom plate 15B is omitted for the sake of description.

The casing 10C mainly includes a tubular portion 11A and a bottom plate 15C. The tubular portion 11A has a hollow tubular shape, and both ends thereof are covered by the bottom plate 15C and the attachment plate 21. The tubular portion 11A is different from the tubular portion 11 in that the tubular portion 11A includes two inflow ports 11c. The filter device 3 may include the tubular portion 11 instead of the tubular portion 11A.

The bottom plate 15C is different from the bottom plate 15 in that a rib forming a cross-shaped recessed portion (not illustrated) is formed on the bottom plate 15a.

The attachment portion 20B mainly includes the attachment plate 21 and a tubular portion 22B. The tubular portion 22B is different from the tubular portion 22 in that a recessed portion into which a cross-shaped recessed portion is inserted is formed.

The plate portion 30C is disposed inside the casing 10C. In the present embodiment, the plate portion 30C includes a lateral partition plate 31B and a longitudinal partition plate 33.

The lateral partition plate 31B is different from the lateral partition plate 31 in that two opening portions 31h are formed.

The longitudinal partition plate 33 partitions each of the first region S1 and the second region S2 into a plurality of regions. Here, the longitudinal partition plate 33 partitions the first region S1 into a third region S3 and a fourth region S4, and partitions the second region S2 into a fifth region S5 and a sixth region S6. The longitudinal partition plate 33 is disposed along the plane II. Note that a state of being disposed along the plane II means a state of being disposed on the plane II or being slightly (for example, a few millimeters to a few centimeters) separated from the plane II.

The inflow ports 11c are disposed such that the longitudinal partition plate 33 is sandwiched therebetween, and allow the oil to flow into each of the third region S3 and the fourth region S4. Two opening portions 32a are disposed such that the longitudinal partition plate 33 is sandwiched therebetween. The opening portions 32a respectively connect the third region S3 and the fifth region S5, and the fourth region S4 and the sixth region S6.

The end 31d of the lateral partition plate 31B and an end 33d of the longitudinal partition plate 33 are inserted into the cross-shaped recessed portion (not illustrated) of the bottom plate 15a. The end 31e of the lateral partition plate 31B and an end (not illustrated) of the longitudinal partition plate 33 are inserted into the recessed portion (not illustrated) of the tubular portion 22B. Thus, the plate portion 30A is unlikely to rotate with respect to the bottom plate 15B.

The arrows in FIG. 9 indicate the flow of the oil. When the construction machine moves forward and the oil in the differential housing 110 flows in the -z direction, the oil flows through the inflow port 11c into each of the third region S3 and the fourth region S4. The oil flowing into the third region S3 from the inflow port 11c flows through the opening portion 32a into the fifth region S5, passes through the filtration member 40 to be filtered, thereafter passes through the outflow ports 11b, and flows out from the filter device 3. Also, the oil flowing into the fourth region S4 from the inflow port 11c flows through the opening portion 32a into the sixth region S6, passes through the filtration member 40 to be filtered, thereafter passes through the outflow ports 11b, and flows out from the filter device 3.

The inflow port 11c is disposed to be separated as much as possible from the opening portion 32a. Here, the inflow port 11c is disposed near the bottom plate 15, and the opening portion 32a is disposed near the attachment plate 21. In addition, the lateral flow of the oil is obstructed by the longitudinal partition plate 33, and the flow of the oil becomes complicated. Therefore, even when the construction machine moves rearward and the oil in the differential housing 110 flows in the +z direction, dust accumulated in each of the fifth region S5 and the sixth region S6 is unlikely to flow through the opening portion 32a into each of the third region S3 and the fourth region S4.

According to the present embodiment, since the longitudinal partition plate 33 is disposed inside the tubular portion 11A, deformation of the casing 10C (the tubular portion 11A) due to external force can be suppressed.

The tubular portion 11A is formed of a thin plate. Accordingly, if the longitudinal partition plate 33 is not disposed, the tubular portion 11A is likely to be deformed when strong force is applied to the tubular portion 11A due to the rotation of the axle. On the other hand, when the longitudinal partition plate 33 is disposed inside the tubular portion 11A as in the present embodiment, the longitudinal partition plate 33 reinforces the tubular portion 11A, and deformation of the tubular portion 11A can be suppressed.

In addition, according to the present embodiment, since the internal configuration of the casing 10A is simple, the oil easily flows through the interior portion of the casing 10A. Therefore, the amount of oil to be filtered by the filter device 3 can be increased.

In the present embodiment, the filter device 3 includes the lateral partition plate 31B extending along the plane I; however, the configuration of the lateral partition plate is not limited to this configuration. For example, the lateral partition plate of the filter device 3 may be inclined with respect to the plane I in the same manner as the lateral partition plate 32. Accordingly, when the oil flows backward, the dust accumulated in each of the fifth region S5 and the sixth region S6 can be prevented from flowing out from the inflow port 11c.

In the present embodiment, one longitudinal partition plate 33 is disposed along the plane II, and the third region S3 and the fourth region S4 have substantially the same size and the fifth region S5 and the sixth region S6 have substantially the same size; however, the position of the longitudinal partition plate 33 is not limited to this position. For example, the longitudinal partition plate 33 is displaced from the plane II, and thus the third region S3 and the fifth region S5 may be larger than the fourth region S4 and the sixth region S6. Then, the oil is allowed to flow from the inflow port 11a only into the third region S3, and thus the oil may flow through the opening portion disposed in the lateral partition plate from the third region S3 to the fifth region S5.

Although one longitudinal partition plate 33 is disposed in the present embodiment, the number of longitudinal partition plates 33 is not limited to one. For example, two longitudinal partition plates are disposed such that the inflow port 11a and the plane II are sandwiched therebetween, the oil may flow from the inflow port 11a into a region sandwiched between the two longitudinal partition plates, and the oil may flow through the opening portion disposed in the lateral partition plate from the first region to the second region.

### Fourth Embodiment

A fourth embodiment of the present invention is a configuration in which partition plates are provided. Hereinafter, a filter device 4 according to the fourth embodiment will be described. Note that the same components as those in the first to third embodiments are denoted by the same reference numerals, and descriptions thereof will be omitted.

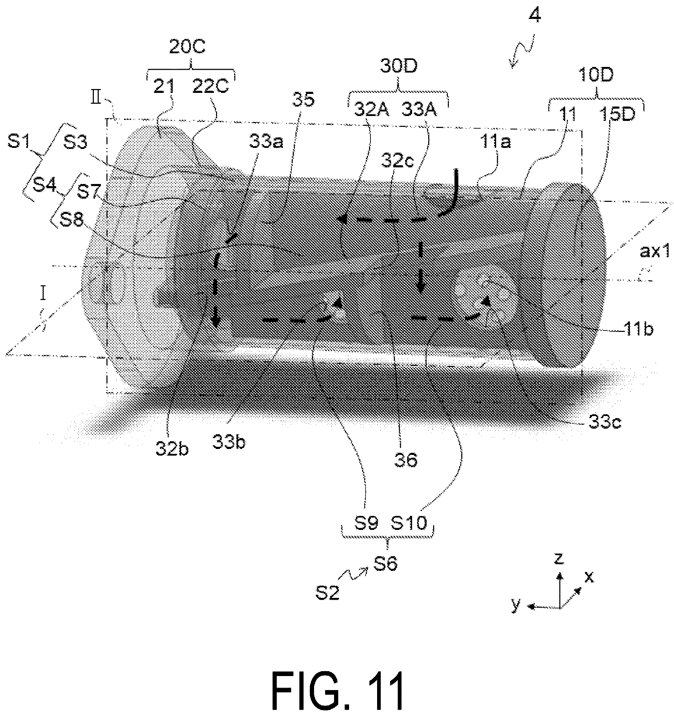

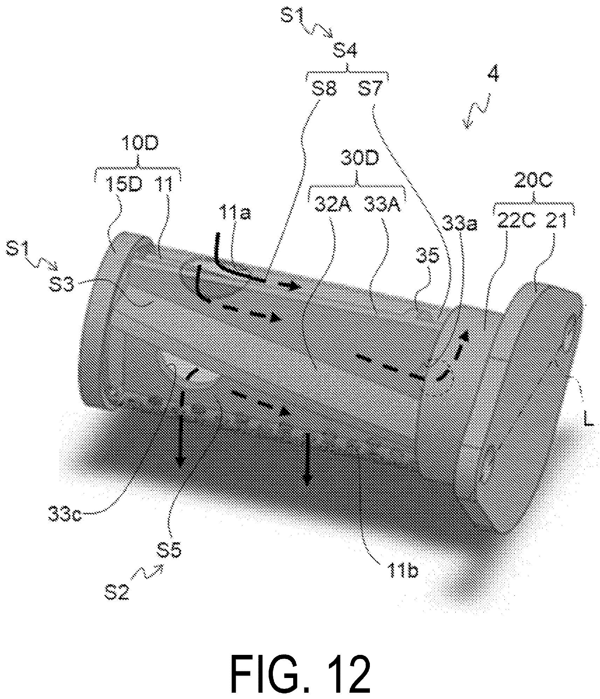

FIGS. 11 and 12 are perspective views each illustrating an overview of the filter device 4. In FIGS. 11 and 12, the inside of the filter device 4 is transparently illustrated. The filter device 4 mainly includes a casing 10D, an attachment portion 20C, a plate portion 30D, partition plates 35 and 36, and the filtration member 40 (not illustrated).

The casing 10D includes the tubular portion 11 and a bottom plate 15D. The bottom plate 15D is configured such that a rib forming a cross-shaped recessed portion (not illustrated) is formed in the bottom plate 15a. The bottom plate 15D is different from the bottom plate 15C in the position of the cross-shaped recessed portion. An end (a protruding portion) of the plate portion 30D is inserted into the cross-shaped recessed portion.

The plate portion 30D is disposed inside the casing 10D. In the present embodiment, the plate portion 30D includes a lateral partition plate 32A and a longitudinal partition plate 33A.

The lateral partition plate 32A divides the inside of the casing 10D into the first region S1 and the second region S2 in the same manner as the lateral partition plate 32. In addition, the lateral partition plate 32A is inclined with respect to the plane I in the same manner as the lateral partition plate 32. The lateral partition plate 32A is different from the lateral partition plate 32 in the configuration of the opening portion.

The longitudinal partition plate 33A is disposed along the plane II in the same manner as the longitudinal partition plate 33, partitions the first region S1 into the third region S3 and the fourth region S4, and partitions the second region S2 into the fifth region S5 and the sixth region S6. The longitudinal partition plate 33A is different from the longitudinal partition plate 33 in the configuration of the opening portion.

The inflow port 11a is disposed so as to straddle the longitudinal partition plate 33A. The outflow ports 11b are disposed in the fifth region S5. Instead of the inflow port 11a, the two inflow ports 11c arranged such that the longitudinal partition plate 33A is sandwiched therebetween may be provided.

The partition plate 35 (corresponding to a first partition plate of the present invention) is disposed in the fourth region S4. The partition plate 35 is disposed so as to be in contact with the lateral partition plate 32A, the longitudinal partition plate 33A, and the tubular portion 11. As a result, the partition plate 35 partitions the fourth region S4 into a seventh region S7 and an eighth region S8. Here, a space close to the attachment plate 21 is referred to as the seventh region S7, and a space close to the bottom plate 15 is referred to as the eighth region S8.

The partition plate 36 (corresponding to a second partition plate of the present invention) is disposed in the sixth region S6. The partition plate 36 has a fan shape when viewed along the axis ax1, and is disposed so as to be in contact with the lateral partition plate 31A and the longitudinal partition plate 33A. As a result, the partition plate 36 partitions the sixth region S6 into a ninth region S9 and a tenth region S10. Here, a space close to the attachment plate 21 is referred to as the ninth region S9, and a space close to the bottom plate 15 is referred to as the tenth region S10.

In the present embodiment, since the tubular portion 11 has a circular shape, the partition plates 35 and 36 have a fan shape when viewed along the axis ax1. However, the shape of partition plates 35 and 36 varies according to the shape of tubular portion 11. For example, when the tubular portion 11 has a rectangular shape, the partition plates 35 and 36 have a rectangular shape when viewed along the axis ax1.

The lateral partition plate 32A is provided with a plurality of opening portions 32b and 32c. The opening portion 32b allows the seventh region S7 and the ninth region S9 to communicate with each other, and the opening portion 32c allows the eighth region S8 and the tenth region S10 to communicate with each other.

The longitudinal partition plate 33A is provided with a plurality of opening portions 33a, 33b and 33c. The opening portion 33a allows the third region S3 and the seventh region S7 to communicate with each other, the opening portion 33b allows the fifth region S5 and the ninth region S9 to communicate with each other, and the opening portion 33c allows the fifth region S5 and the tenth region S10 to communicate with each other.

The arrows in FIGS. 11 and 12 indicate the flow of the oil. When the construction machine moves forward and the oil in the differential housing 110 flows in the -z direction, the oil flows through the inflow port 11a into each of the third region S3 and the eighth region S8.

The oil flowing from the inflow port 11a into the third region S3 flows through the opening portion 33a into the seventh region S7, flows through the opening portion 32b into the ninth region S9, flows through the opening portion 33b into the fifth region S5, passes through the filtration member 40 to be filtered, thereafter passes through the outflow ports 11b, and flows out of the filter device 4.

In addition, the oil flowing from the inflow port 11a into the eighth region S8 flows through the opening portion 32c into the tenth region S10, flows through the opening portion 33c into the fifth region S5, passes through the filtration member 40 to be filtered, thereafter passes through the outflow ports 11b, and flows out from the filter device 4.

When the construction machine moves rearward, the oil in the differential housing 110 flows in the +z direction. However, the inside of the casing 10A is partitioned into a plurality of regions by the partition plates 35 and 36 and the flow of the oil becomes complicated; therefore, the dust accumulated in the fifth region S5 is unlikely to flow into the third region S3 and the eighth region S8.

According to the present embodiment, since the longitudinal partition plate 33A is disposed inside the tubular portion 11, deformation of the casing 10 (the tubular portion 11) due to external force can be suppressed.

According to the present embodiment, by providing the partition plates 35 and 36, the flow of the oil becomes complicated. Therefore, even when the vehicle moves rearward and the oil flows backward, the outflow of dust from the inflow port 11a can be prevented. In particular, according to the present embodiment, in order for dust to flow out from the inflow port 11a, the dust accumulated in the fifth region S5 first needs to flow to the sixth region S6 (the ninth region S9 and the tenth region S10), that is, the dust needs to move in the -x direction. However, since this is a direction different from the flow of the oil (in the +z direction) when the oil flows backward, the dust accumulated in the fifth region S5 can be prevented from flowing to the sixth region S6. As a result, the dust can be prevented from flowing out from the inflow port 11a.

In the present embodiment, the partition plate 35 is disposed at a position where the seventh region S7 is smaller than the eighth region S8, and the partition plate 36 is disposed such that the ninth region S9 and the tenth region S10 have substantially the same size; however, the positions of the partition plates 35 and 36 in the y direction are not limited to these positions.

Although the partition plates 35 and 36 are disposed parallel to the xz plane in the present embodiment, the partition plates 35 and 36 may be inclined with respect to a plane parallel to the xz plane.

### First Modification of Fourth Embodiment

Although the filter device 4 according to the fourth embodiment of the present invention includes the two partition plates 35 and 36, the number of partition plates is not limited to two. For example, the filter device may have either the partition plate 35 or the partition plate 36. Hereinafter, a filter device 4A according to a modification will be described. Note that the same components as those in the fourth embodiment are denoted by the same reference numerals, and descriptions thereof will be omitted.

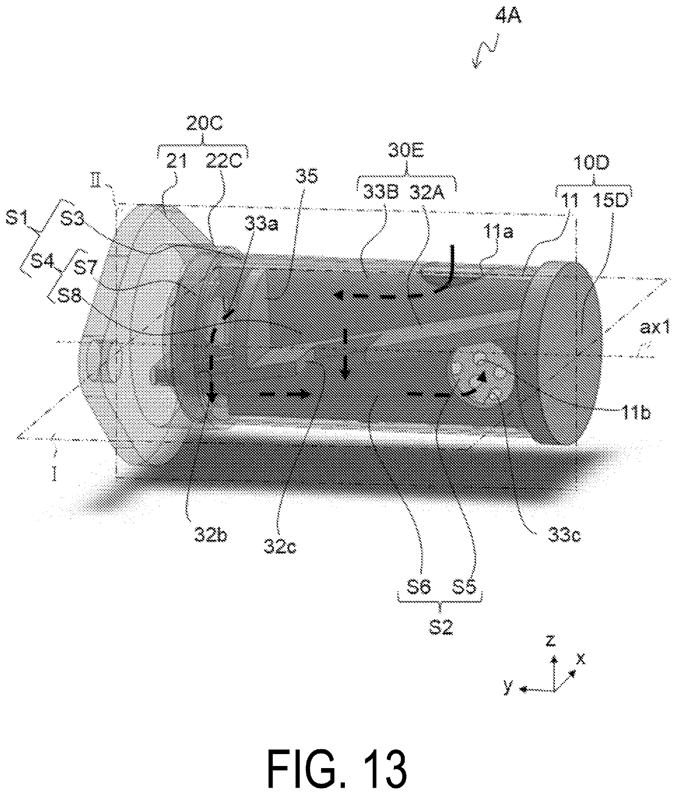

FIG. 13 is a perspective view illustrating an overview of the filter device 4A. In FIG. 13, the inside of the filter device 4A is transparently illustrated. The filter device 4A mainly includes the casing 10D, the attachment portion 20C, a plate portion 30E, the partition plate 35, and the filtration member 40 (not illustrated).

The plate portion 30E includes the lateral partition plate 32A and a longitudinal partition plate 33B. Similarly to the longitudinal partition plate 33A, the longitudinal partition plate 33B partitions the first region S1 into the third region S3 and the fourth region S4, and partitions the second region S2 into the fifth region S5 and the sixth region S6. The longitudinal partition plate 33B is different from the longitudinal partition plate 33A in that the longitudinal partition plate 33B does not include the opening portion 33b. Instead of the lateral partition plate 32A inclined with respect to the plane **I, a** lateral partition plate extending along the plane I may be used.

The arrows in FIG. 13 indicate the flow of the oil. When the construction machine moves forward and the oil in the differential housing 110 flows in the -z direction, the oil flows through the inflow port 11a into each of the third region S3 and the eighth region S8.

The oil flowing from the inflow port 11a into the third region S3 flows through the opening portion 33a into the seventh region S7 (a part of the fourth region S4), and flows through the opening portion 32b into the sixth region S6. The oil flowing into the eighth region S8 from the inflow port 11a flows through the opening portion 32c into the sixth region S6. In other words, the oil flowing through the inflow port 11a into each of the third region S3 and the eighth region S8 joins up in the sixth region S6.

The oil flowing into the sixth region S6 flows through the opening portion 33c into the fifth region S5, passes through the filtration member (not illustrated) to be filtered, thereafter passes through the outflow ports 11b, and flows out from the filter device 4A.

When the construction machine moves rearward, the oil in the differential housing 110 flows in the +z direction. However, the inside of the casing 10 is partitioned into a plurality of regions by the partition plate 35 and the flow of the oil becomes complicated; therefore, the dust accumulated in the fifth region S5 is unlikely to flow into the third region S3 and the eighth region S8.

According to the present embodiment, since the longitudinal partition plate 33B is disposed inside the tubular portion 11, deformation of the casing 10 (the tubular portion 11) due to external force can be suppressed.

According to the present embodiment, even by providing only one partition plate 35, the oil flowing into the filter device 4A flows from the sixth region S6 to the fifth region S5 and thereafter flows out from the outflow ports 11b. Therefore, the flow of the oil (in the +z direction) when the oil flows backward is differentiated from the flow from the fifth region S5 to the sixth region S6 (in the -x direction). Accordingly, even when the vehicle moves rearward and the oil flows backward, the outflow of dust from the inflow port 11a can be prevented.

### Second Modification of Fourth Embodiment

The filter device 4 according to the fourth embodiment of the present invention includes the lateral partition plate 32A inclined with respect to the plane I; however, the configuration of the lateral partition plate is not limited thereto. Hereinafter, a filter device 4B according to a modification will be described. Note that the same components as those in the fourth embodiment are denoted by the same reference numerals, and descriptions thereof will be omitted.

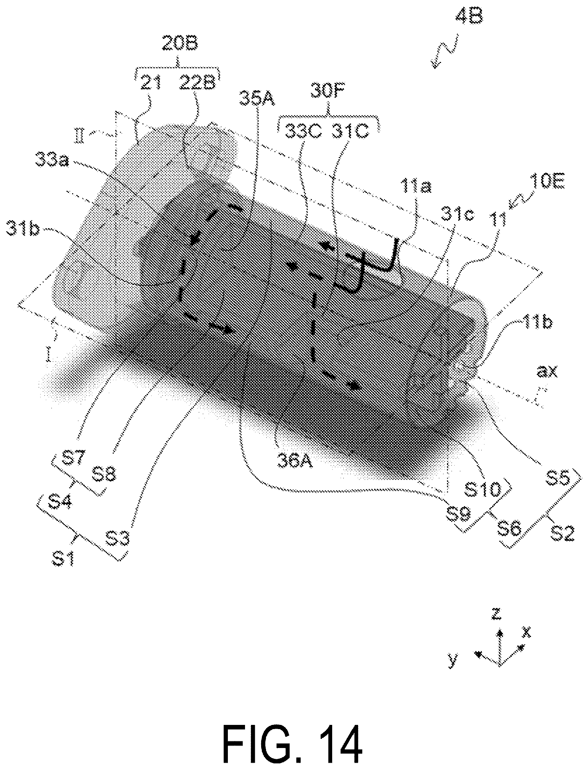

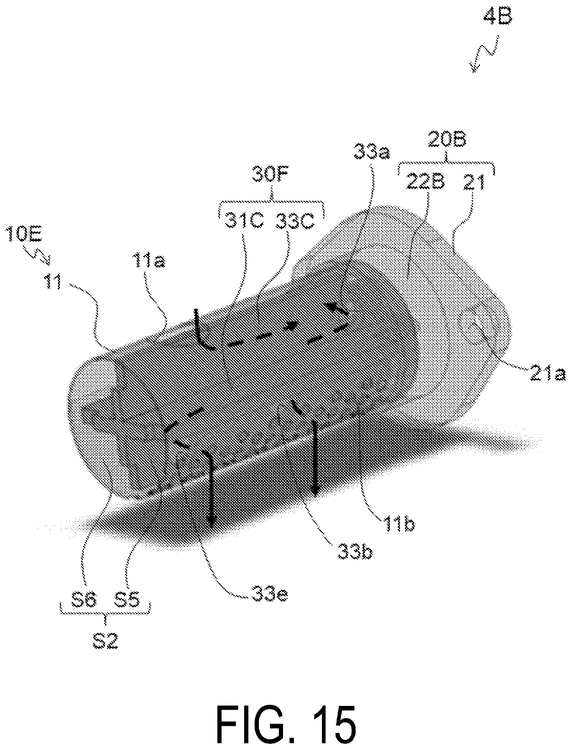

FIGS. 14 and 15 are perspective views each illustrating an overview of the filter device 4B. In FIGS. 14 and 15, the inside of the filter device 4B is transparently illustrated. The filter device 3B mainly includes a casing 10E (the tubular portion 11 and the bottom plate 15B (not illustrated)), the attachment portion 20B, a plate portion 30F, partition plates 35A and 36A, and the filtration member 40 (not illustrated).

The plate portion 30F is disposed inside the casing 10D. In the present embodiment, the plate portion 30F includes a lateral partition plate 31C and a longitudinal partition plate 33C.

The lateral partition plate 31C divides the inside of the casing 10 into the first region S1 and the second region S2. The lateral partition plate 31C extends along the plane I in the same manner as the lateral partition plate 31. The lateral partition plate 31C is different from the lateral partition plate 31 in that the lateral partition plate 31C does not include the opening portion 31a but includes opening portions 31b and 31c.

Similarly to the longitudinal partition plate 33A, the longitudinal partition plate 33C partitions the first region S1 into the third region S3 and the fourth region S4, and partitions the second region S2 into the fifth region S5 and the sixth region S6. The longitudinal partition plate 33B is different from the longitudinal partition plate 33A in that the longitudinal partition plate 33B includes an opening portion 33e instead of the opening portion 33c. The opening portion 33c and the opening portion 33e are different in size.

The partition plate 35A is disposed in the fourth region S4, and the partition plate 36A is disposed in the sixth region S6.

The partition plate 35A has a fan shape when viewed along the axis ax1 and is different from the partition plate 35 in size. The partition plate 35A is in contact with the lateral partition plate 32A and the longitudinal partition plate 33C, and partitions the fourth region S4 into the seventh region S7 and the eighth region S8.

The partition plate 36A has a fan shape when viewed along the axis ax1 and is different from the partition plate 36 in size. The partition plate 36A is in contact with the lateral partition plate 32A and the longitudinal partition plate 33C, and partitions the sixth region S6 into the ninth region S9 and the tenth region S10.

The arrows in FIGS. 14 and 15 indicate the flow of the oil. When the construction machine moves forward and the oil in the differential housing 110 flows in the -z direction, the oil flows through the inflow port 11a into each of the third region S3 and the eighth region S8.

The oil flowing into the third region S3 from the inflow port 11c flows through the opening portion 33a into the seventh region S7, flows through the opening portion 31b into the ninth region S9, flows through the opening portion 33b into the fifth region S5, passes through the filtration member to be filtered, thereafter passes through the outflow ports 11b, and flows out of the filter device 3.

In addition, the oil flowing into the eighth region S8 from the inflow port 11c flows through the opening portion 31c into the tenth region S10, flows through the opening portion 33e into the fifth region S5, passes through the filtration member (not illustrated) to be filtered, thereafter passes through the outflow ports 11b, and flows out from the filter device 4B.

When the construction machine moves rearward, the oil in the differential housing 110 flows in the +z direction. However, the inside of the casing 10 is partitioned into a plurality of regions by the partition plates 35A and 36A and the flow of the oil becomes complicated; therefore, the dust accumulated in the fifth region S5 is unlikely to flow into the third region S3 and the eighth region S8, that is, the dust is unlikely to flow out from the inflow port 11a.

According to the present embodiment, since the longitudinal partition plate 33C is disposed inside the tubular portion 11, deformation of the casing 10 (the tubular portion 11) due to external force can be suppressed.

The embodiments of the present invention are described above in detail with reference to the drawings. However, specific configurations are not limited to the embodiments and also include changes in design or the like without departing from the gist of the invention. For example, in the examples described above, detailed description is made to facilitate understanding of the present invention, and the examples are not necessarily limited to examples including all the configurations described above. In addition, the configuration of an embodiment can be replaced partially with the configurations of other embodiments. Moreover, addition, deletion, replacement, or the like of other configurations can be made on the configurations of the embodiments.

The term "substantially" refers not only to cases where there is an exact match, but also to concepts that include errors and modifications to an extent that does not lose their identity. For example, the term "cylindrical shape" refers not only to strictly cylindrical shapes, but also to concepts that include cases where the shape can be considered to be the same as a cylinder. Further, simple expressions such as orthogonal, parallel, and identical are not to be understood as merely being strictly, for example, orthogonal, parallel, and identical, and include being, for example, substantially parallel, substantially orthogonal, and substantially identical.

The term "vicinity" means that is includes a certain range (which can be determined as desired) of area near the reference position. For example, the term "a vicinity of an end" refers to a range of regions in the vicinity of the end, and is a concept indicating that the end may or need not be included.

### Reference Signs List

1, 1A, 2, 3, 3A, 3B, 4, 4A, 4B: Filter device
10, 10A, 10B, 10C, 10D, 10E: Casing
11, 11A: Tubular portion
11a, 11c: Inflow port
11d: Outflow port
11d: Upper end
11e: Lower end
15, 15A, 15B, 15C, 15D: Bottom plate
15a: Bottom plate
15b: Tubular portion
15c: Inner peripheral surface
15d, 15f, 15g: Rib
15e: Recessed portion
20, 20A, 20B, 20C: Attachment portion
21: Attachment plate
21a: Hole
22, 22A, 22B: Tubular portion
22a, 22c: Groove
22b: Recessed portion
30, 30A, 30B, 30C, 30D, 30E, 30F: Plate portion
31, 31A, 31B, 31C, 32, 32A: Lateral partition plate
33, 33A, 33B, 33C: Longitudinal partition plate
31a, 31b, 31c, 31h, 32a, 32b, 32c, 33a, 33b, 33c, 33e: Opening portion
31d, 31e, 32e, 33d: End
31f, 31g: Recessed portion
35, 35A, 36, 36A: Partition plate
40: Filtration member
100: Axle assembly
110: Differential housing
111: Opening
121, 122: Axle
123, 124: Axle end
150: Drive shaft

## Claims

1. A filter device configured to be disposed in an axle assembly and configured to filter oil sealed inside the axle assembly, the filter device comprising:
an attachment portion configured to be detachably disposed in the axle assembly;
a casing including a tubular portion having a hollow interior portion and a bottom plate covering one end of the tubular portion, the tubular portion having an end not covered by the bottom plate, the end being covered by the attachment portion; and
a plate portion disposed inside the casing, wherein
the casing is configured to be inserted into the axle assembly by attaching the attachment portion to the axle assembly,
the tubular portion is provided with an inflow port through which the oil can flow in and an outflow port through which the oil can flow out,
the plate portion is a lateral partition plate dividing an interior portion of the casing into a first region including the inflow port and a second region including the outflow port,
an opening portion allowing the first region and the second region to communicate with each other is formed in the lateral partition plate,
both ends of the lateral partition plate are in contact with the bottom plate and the attachment portion, respectively, and
a protruding portion is formed on one of the lateral partition plate and the bottom plate or one of the lateral partition plate and the attachment portion, and a recessed portion into which the protruding portion is inserted is formed in the other.

2. The filter device according to claim 1, wherein the recessed portion has a strip-shape, an arcuate shape, a semi-elliptical shape, or a semicircular shape.

3. The filter device according to claim 2, wherein
a first hole and a second hole being a pair of holes are formed in the attachment portion in a manner that the tubular portion is sandwiched between the first hole and the second hole when viewed along a center line of the tubular portion, and
when viewed along the center line, an inclination of the lateral partition plate with respect to a first line being a line passing through a center of the first hole and a center of the second hole is 0.5° or less.

4. The filter device according to claim 1 or 2, wherein
a first hole and a second hole being a pair of holes are formed in the attachment portion in a manner that the tubular portion is sandwiched between the first hole and the second hole when viewed along a center line of the tubular portion, and
the lateral partition plate is inclined with respect to a first plane being a plane including an axis of the tubular portion and substantially parallel to a first line passing through a center of the first hole and a center of the second hole.

5. The filter device according to claim 4, wherein an inclination angle of the lateral partition plate with respect to the first plane is 15° or more.

6. The filter device according to any one of claims 1 to 5, wherein
the plate portion further includes a longitudinal partition plate partitioning each of the first region and the second region into a plurality of regions, and
the longitudinal partition plate partitions the first region into a third region and a fourth region, and partitions the second region into a fifth region and a sixth region.
